# DEMANDE DE BREVET EUROPEEN

(11) **EP 4 657 301 A1**
(43) Date de publication de la demande: **03.12.2025**
(21) Numéro de dépôt: 25178011.0
(22) Date de dépôt: 21.05.2025
(51) Int. Cl.: G06F 21/79, H04L 9/08

(54) **PROCEDE DE MISE A JOUR D'UNE DONNEE DE SECURITE STOCKEE DANS UNE MEMOIRE D'UN MICROCONTROLEUR**

(30) Priorité: 29.05.2024 FR 2405544
(71) Demandeur: STMicroelectronics International N.V., 1228 Plan-les-Ouates, Geneva (CH)
(72) Inventeur: BENHAMMADI, Jawad, 38800 PONT DE CLAIX (FR)
(74) Mandataire: Cabinet Beaumont

(57) **Abrégé**

La présente description concerne un procédé de mise à jour d'une donnée de sécurité (Key 20) stockée dans un premier secteur (200) d'une mémoire (104) non volatile d'un microcontrôleur (100), un premier statut (OBK_Sel_1, OBK_Sel_2) étant affecté au premier secteur (200), le procédé comprenant les étapes successives suivantes :
- effacer (alternate_OBK_erase) le contenu d'un deuxième secteur (220) de la mémoire non volatile, différent du premier secteur (200),
- écrire une nouvelle version de la donnée de sécurité (Key 20 update) dans le deuxième secteur (220) ; et
- affecter le premier statut (OBK_Sel_1, OBK_Sel_2) au deuxième secteur (220).

## Description

### Domaine technique

La présente description concerne de façon générale les procédés de mise à jour de données de sécurité dans des mémoires non volatiles d'un microcontrôleur ainsi que les microcontrôleurs mettant en oeuvre ces procédés.

### Technique antérieure

Les données de sécurité stockées dans des mémoires de microcontrôleurs doivent pouvoir être mises à jour. Les procédures de mises à jour actuelles peuvent présenter des faiblesses en termes de robustesse par exemple vis-à-vis d'une coupure d'alimentation du microcontrôleur.

### Résumé de l'invention

Il existe un besoin d'améliorer les procédés de mise à jour des données de sécurité des microcontrôleurs.

Un mode de réalisation pallie tout ou partie des inconvénients des procédés connus.

Un mode de réalisation prévoit un procédé de mise à jour d'une donnée de sécurité stockée dans un premier secteur d'une mémoire non volatile d'un microcontrôleur, un premier statut étant affecté au premier secteur, le procédé comprenant les étapes successives suivantes :
- effacer le contenu d'un deuxième secteur de la mémoire non volatile, différent du premier secteur,
- écrire une nouvelle version de la donnée de sécurité dans le deuxième secteur ; et
- affecter le premier statut au deuxième secteur.

Selon un mode de réalisation, les étapes :
- effacer le contenu d'un deuxième secteur de la mémoire non volatile, différent du premier secteur,
- écrire une nouvelle version de la donnée de sécurité dans le deuxième secteur ; et
- affecter le premier statut au deuxième secteur ; sont réalisées pour chaque cycle de mise à jour.

Un mode de réalisation prévoit un microcontrôleur comprenant une mémoire ayant un premier secteur mémoire et un deuxième secteur mémoire différent du premier secteur, une donnée de sécurité à mettre à jour étant stockée dans le premier secteur, un premier statut étant affecté au premier secteur, le microcontrôleur étant configuré pour successivement :
- effacer le contenu du deuxième secteur mémoire,
- écrire une nouvelle version de la donnée de sécurité dans le deuxième secteur ; et
- affecter le premier statut au deuxième secteur.

Selon un mode de réalisation, chaque secteur comprend plusieurs données de sécurité.

Selon un mode de réalisation, après avoir écrit la nouvelle version de la donnée de sécurité dans le deuxième secteur et, avant d'affecter le premier statut au deuxième secteur, les données de sécurité stockées dans le premier secteur sont recopiées séquentiellement dans le deuxième secteur.

Selon un mode de réalisation, la recopie desdites données de sécurité du premier secteur dans le deuxième secteur est mise en oeuvre par une machine d'état.

Selon un mode de réalisation, le premier secteur et le deuxième secteur comprennent des espaces mémoires référencés chacun par un indice d'adresse,
lesdites données de sécurité du premier secteur étant chacune stockée dans un desdits espace mémoire du premier secteur, et chacune recopiée dans le deuxième secteur si l'espace mémoire du deuxième secteur, ayant un indice d'adresse correspondant à l'indice d'adresse de l'espace mémoire associé à la donnée de sécurité du premier secteur à recopier, est vierge.

Selon un mode de réalisation, l'effacement du contenu du deuxième secteur est mis en oeuvre par un circuit de commande de la mémoire suite à la première commande logicielle.

Selon un mode de réalisation, l'écriture de la nouvelle version de la donnée de sécurité dans le deuxième secteur est mise en oeuvre par ledit circuit de commande suite à une deuxième commande logicielle.

Selon un mode de réalisation, un deuxième statut est affecté au premier secteur une fois le premier statut affecté au deuxième secteur.

Selon un mode de réalisation, préalablement à la mise jour, le premier statut est affecté au premier secteur et le deuxième statut est affecté au deuxième secteur.

Selon un mode de réalisation, chaque secteur mémoire comporte un espace dédié au stockage du statut affecté au secteur.

Selon un mode de réalisation, seul le secteur mémoire affecté du premier statut est lu.

Selon un mode de réalisation, la ou les données de sécurité sont des clés de chiffrement.

Un mode de réalisation prévoit un système comprenant un microcontrôleur tel que décrit ci-dessus et une unité de mise à jour externe au microcontrôleur ;
l'unité de mise à jour étant configurée pour transmettre, au microcontrôleur et lors d'une mise à jour, ladite nouvelle version de la donnée de sécurité.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de microcontrôleur du type auquel s'appliquent les modes de réalisation décrits ;
la figure 2 illustre un exemple du microcontrôleur de la figure 1 ;
la figure 3 représente un procédé de fonctionnement du microcontrôleur de la figure 1 selon un exemple ; et
la figure 4 représente un procédé de fonctionnement du microcontrôleur de la figure 1 selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

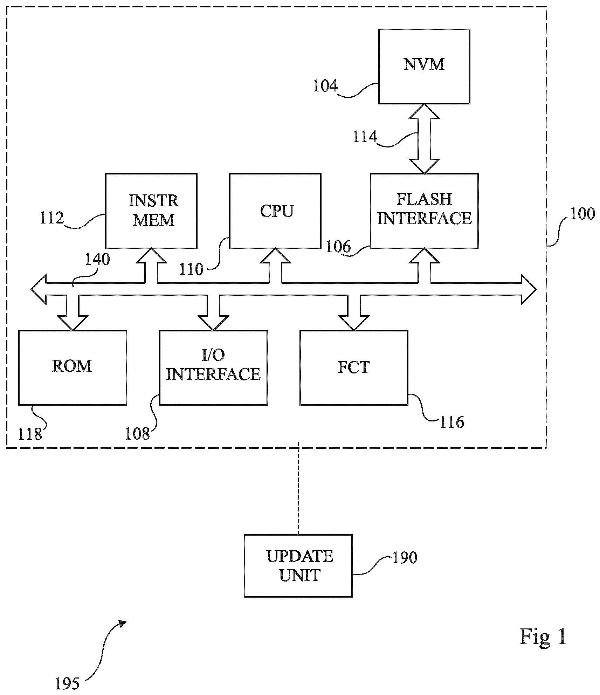

La figure 1 représente, de façon très schématique et sous forme de blocs, un exemple de microcontrôleur 100 du type auquel s'appliquent les modes de réalisation décrits. Le circuit 100 est par exemple un microcontrôleur.

Le microcontrôleur 100 comprend une mémoire non-volatile 104 (NVM), par exemple de type mémoire FLASH ou à changement de phase, capable de communiquer, via un bus de communication 114, avec une interface de mémoire non-volatile 106 (NVM INTERFACE) configurée pour écrire ou lire des données dans et depuis la mémoire non-volatile 104.

Le circuit 100 comprend en outre, par exemple, une unité de traitement 110 (CPU) comprenant un ou plusieurs processeurs sous contrôle d'instructions stockées dans une mémoire d'instructions 112 (INSTR MEM). La mémoire d'instruction 112 est par exemple une mémoire volatile de type à accès aléatoire (en anglais Random Access Memory, RAM). L'unité de traitement 110 et la mémoire 112 communiquent, par exemple, via un bus système 140 (de données, d'adresses et de commande). La mémoire FLASH 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le dispositif 100 peut intégrer d'autres circuits mettant en œuvre d'autres fonctions (par exemple, une ou plusieurs mémoires volatiles et/ou non-volatiles, ou d'autres unités de traitement), symbolisées par un bloc 116 (FCT) en figure 1. Parmi ces autres circuits, le circuit 100 comporte par exemple une mémoire morte ou statique 118 (ROM).

La mémoire 104 contient par exemple des données de sécurité, c'est-à-dire des données comme des clés de sécurité ou des données sensibles, qui sont liées par exemple à des options choisies par l'utilisateur (Option Bytes Keys en anglais) du microcontrôleur. Il peut être utile de mettre à jour certaines de ces données de sécurité.

Dans l'exemple représenté, une unité de mise à jour 190, externe au microcontrôleur 100 est configurée pour transmettre, au microcontrôleur 100 et lors d'une mise à jour, une nouvelle version de la donnée de sécurité à mettre à jour. Cette transmission peut être filaire ou sans fil (Over The Air, OTA en anglais). L'unité de mise à jour et le microcontrôleur 100 forment un système 195.

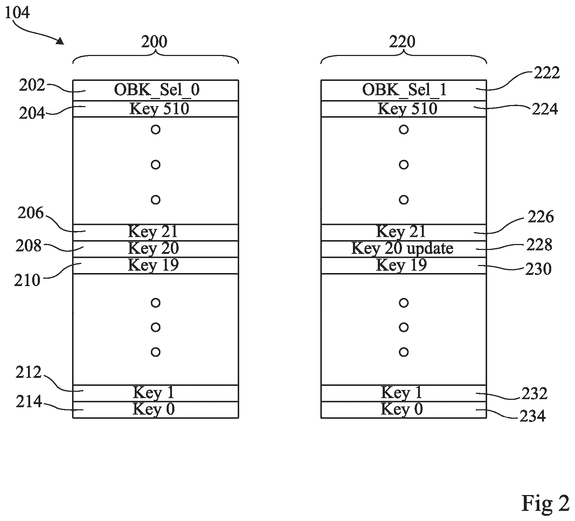

La figure 2 illustre un exemple du microcontrôleur de la figure 1.

Plus particulièrement, l'exemple de la figure 2 illustre un exemple de la mémoire 104. Dans cet exemple, la mémoire 104 comprend un premier et un deuxième secteurs mémoires 200, 220.

Chacun de ces deux secteurs mémoires 200,220 comprend des espaces mémoires 202, 204, 206, 208, 210, 212, 214, 222, 224, 226, 228, 230, 232 et 234. D'autres espaces mémoire intermédiaires sont présents mais non représentés pour des raisons de clarté.

Les espaces mémoires sont référencés chacun par un indice d'adresse Addr_index. Avant une étape de recopie décrite dans d'autres figures, des données de sécurité Key 0, Key 1,...,Key 19, Key 20, Key 21,..., Key 510, du premier secteur 200 sont chacune stockée respectivement dans un des espaces mémoire du premier secteur d'indice correspondant. Par exemple, la donnée de sécurité Key 0 est stockée dans l'espace mémoire d'indice 0.

Les espaces mémoires 202 et 222 contiennent respectivement une valeur, par exemple un octet relié à un registre, représentative d'un statut de lecture du secteur mémoire dans lequel il est stocké. Dans l'exemple représenté, l'espace mémoire 202 du premier secteur 200 a la valeur OBK_Sel_0. Cette valeur entraine par exemple que le premier secteur n'est pas lu lorsqu'une donnée de sécurité est demandée. Dans l'exemple représenté, l'espace mémoire 222 du deuxième secteur 2220 a la valeur OBK_SEL_1. Cette valeur entraine par exemple que le deuxième secteur est celui qui est lu lorsqu'une donnée de sécurité est demandée.

Dans un exemple, une valeur OBK_SEL_2 entraine par exemple que le secteur correspondant est celui qui est lu lorsqu'une donnée de sécurité est demandée.

Lorsqu'une des données de sécurité, par exemple dans l'exemple représenté la donnée Key 20 de l'espace mémoire 208 du secteur 200, est mise à jour, celle-ci est mise à jour dans l'autre secteur, c'est-à-dire le secteur 220 qui est dit de substitution. Puis une fois la mise à jour réalisée, le statut du secteur de substitution est changé pour qu'il devienne le secteur courant, c'est-à-dire celui qui est lu lorsqu'une donnée de sécurité est demandée. Pour ce faire, l'espace mémoire 228 d'indice correspondant dans l'autre secteur 220 doit être d'abord effacé. Dans un exemple, tout le secteur 220, c'est-à-dire tous les espaces mémoires dédiés aux données de sécurité, est par exemple effacé et pas seulement l'espace mémoire 228. Puis la nouvelle version de la donnée de sécurité, Key_20_update, est écrite dans le secteur 228, par exemple suite à une commande logicielle mise en oeuvre avec l'interface mémoire 106. Les données de sécurité encore valides sont ensuite recopiées, depuis le secteur 200, vers le deuxième secteur 220, dans les espaces mémoires d'indice respectifs à l'exception de l'espace mémoire 228 où la donnée a été mise à jour.

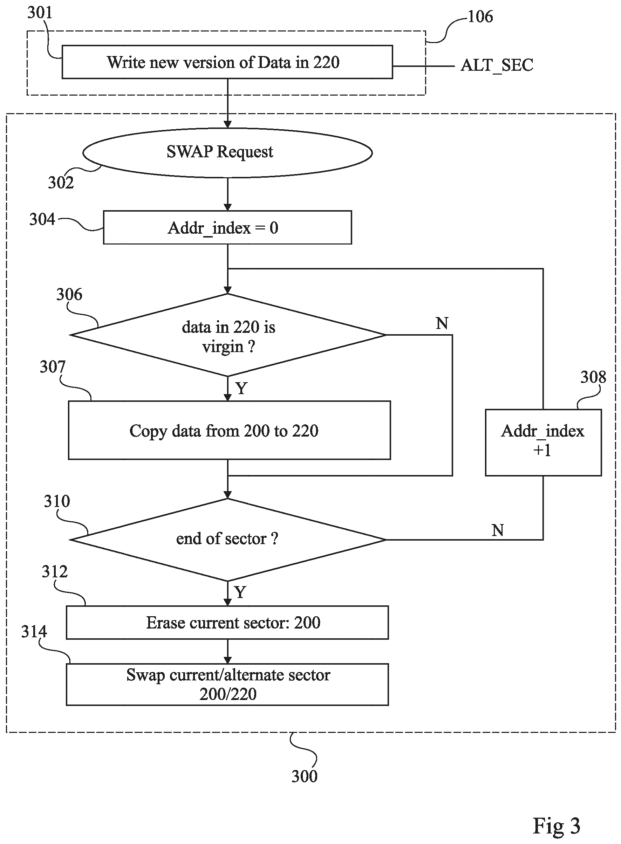

La figure 3 représente un procédé de fonctionnement du circuit de la figure 1 selon un exemple.

Plus particulièrement, l'exemple représenté illustre un procédé de mise à jour d'une des données de sécurité, comme par exemple la donnée Key 20 comme dans la figure précédente.

Dans cet exemple, au début du procédé, le secteur 200 est le secteur courant, c'est dire le secteur qui est lu lorsqu'une donnée de sécurité est nécessaire, et le secteur 220 est le secteur de substitution. En d'autres termes, au début du procédé, la valeur de l'espace mémoire dédié au statut de lecture du secteur 200 est OBK_Sel_1 ou OBK_Sel_2, et la valeur de l'espace mémoire dédié au statut de lecture du secteur 220 est OBK_Sel_0.

Dans cet exemple, le secteur 220 est vide au démarrage du procédé, c'est-à-dire que les espaces mémoires dédiés aux données de sécurité ont été préalablement effacées lors d'une exécution précédente du procédé comme cela va être décrit ci-après.

Dans une première étape 301 (Write new version of Data in 220), la nouvelle version de la donnée de sécurité à mettre à jour est écrite dans le deuxième secteur 220 par exemple avec une commande logicielle mise en oeuvre avec l'interface mémoire 106 via la lecture d'un registre ALT_SECT. L'écriture se fait dans l'espace mémoire ayant le même indice mémoire que l'espace mémoire contenant la donnée à mettre à jour dans le secteur 200. Dans un exemple cette écriture se fait directement grâce à un tableau d'association de bit d'adresse (bitmap en anglais) lié aux secteurs 200 et/ou 220.

Dans la suite du procédé, des étapes 302,304,306,307,308,310,312 et 314 sont mises en oeuvre par une machine d'état 300, par exemple implémentée dans l'interface mémoire ou dans un circuit du microcontrôleur 100.

Dans l'étape suivante 302 (SWAP Request), une recopie des données du secteur 200 qui sont valides, c'est-à-dire qui n'ont pas été mises à jour, commence.

Dans l'étape suivante 304 (Addr_index=0), la recopie commence par l'espace mémoire dont l'indice d'adresse mémoire est 0.

Dans l'étape suivante 306 (data in 220 is virgin ?), la machine d'état 300 vérifie si l'espace mémoire d'indice d'adresse 0 est vide dans le secteur 220.

Si oui (branche Y), l'étape 307 (Copy data from 200 to 220) est effectuée et si non (branche N), l'étape 310 (end of sector?) est mise en oeuvre.

L'étape 307 consiste à recopier la donnée de sécurité présente dans l'indice du secteur 200, dont la valeur est celle en sortie Y de l'étape 306, vers l'espace mémoire ayant le même indice dans le secteur 220.

Pour l'espace mémoire du secteur 220 dont l'indice 228 est celui de la donnée mise à jour Key_20_update, l'étape 306 renvoie un résultat négatif (branche N) car la donnée est déjà présente dans le secteur 220 avant la recopie des autres données venant du secteur 200. Cette branche N est suivie de l'étape 310.

Dans l'étape 310, si (branche Y) l'indice d'adresse correspond à la valeur du dernier indice d'adresse relatif à des données de sécurité du secteur 220, alors l'étape 312 (Erase current sector :200) est mise en oeuvre. Dans le cas contraire, l'étape 308 est mise en oeuvre.

L'étape 308 (Addr_index+1) consiste à incrémenter d'une unité la valeur de l'indice d'adresse Addr_index qui devient alors Addr_index+1.

Dans l'étape 312 (Erase current sector :200), le secteur 200 qui est le secteur courant, est effacé par la machine d'état 300. En d'autres termes la machine d'état efface les espaces mémoires du secteur 200 qui sont dédiés aux données de sécurité, c'est-à-dire que l'espace mémoire dédié au statut de lecture n'est pas effacé.

Puis, dans l'étape 314 (Swap current/aletrnate sector 220/220), le statut du secteur 200 est affecté au secteur 220. En d'autres termes, la machine d'état 300 modifie la valeur OBK_Sel_1 du secteur 200 en la valeur OBK_Sel_0 et la valeur OBK_Sel_0 du secteur 200 en la valeur OBK_Sel_1. A la fin du procédé de la figure 3, le secteur 220 devient le secteur courant et le secteur 200 devient le secteur de substitution.

Dans cet exemple de procédé, la machine d'état réalise toutes les étapes 302 à 314. Ceci rend le microcontrôleur vulnérable car si une coupure d'alimentation ou une réinitialisation du microcontrôleur 100 se produit entre les étapes 312 et 314, alors le changement de statut des secteurs n'aura pas été effectué mais le secteur courant, c'est-à-dire le secteur 200, aura déjà été effacé ou corrompu. Au cours du redémarrage, le secteur courant 200 sera lu sauf qu'il ne contient alors plus aucunes données ou alors des données corrompues.

Il convient de noter que l'étape 312 ne peut pas être mise en oeuvre entre les étapes 302 et 304 puisqu'il est nécessaire de recopier les données de sécurité valides du secteur 200 vers le secteur 220 et qu'il convient de garder les données valides dans le secteur courant 200 tant que la recopie n'est pas terminée, c'est-à-dire tant que l'étape 310 n'a pas mis en oeuvre la branche Y associée.

Une solution possible est de vérifier, à chaque redémarrage, si au moins une des étapes 302 à 314 mise en oeuvre par la machine d'état a été interrompue lors de la réinitialisation. Dans l'affirmative, un octet d'option de chargement sera lancé pour mettre à jour l'espace mémoire du secteur 200 lié au statut de lecture vers OBK_Sel_0. Néanmoins cela a le désavantage de devoir être implémenté au démarrage de chaque application.

Les modes de réalisation décrits ci-après prévoient de palier à ces inconvénients en implémentant un procédé de mise à jour d'une donnée de sécurité stockée dans le premier secteur 200, un premier statut (OBK_Sel_1 ou OBK_Sel_2) étant affecté au premier secteur 200, le procédé comprenant les étapes successives suivantes :
- effacer le contenu du deuxième secteur mémoire 220,
- écrire une nouvelle version de la donnée de sécurité dans le deuxième secteur 220 ; et
- affecter le premier statut (OBK_Sel_1 ou OBK_Sel_2) au deuxième secteur 220.

Cela permet de ne pas perdre les clés existantes quand bien même une réinitialisation ou une perte d'alimentation a lieu avant que le statut de lecture des secteurs soit modifié.

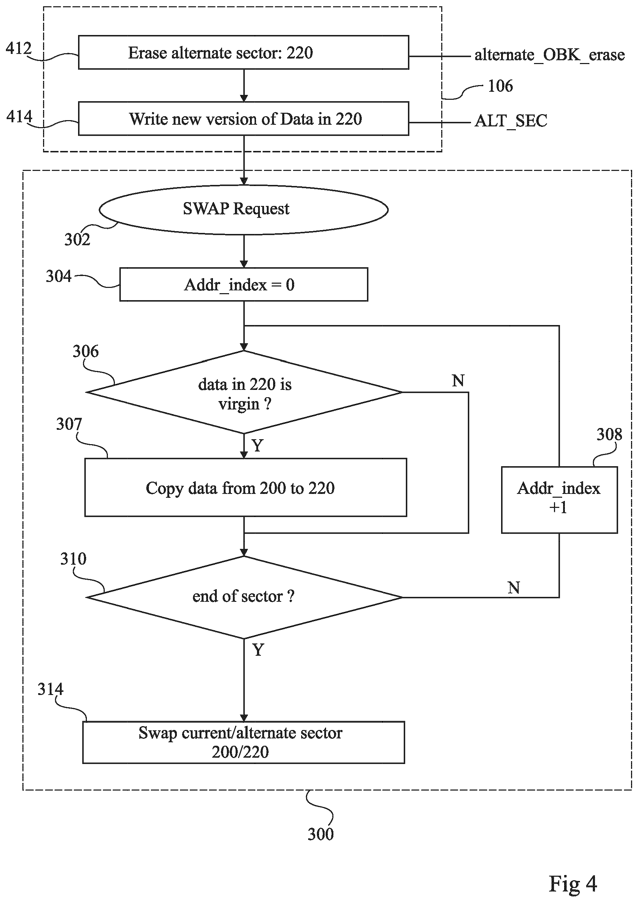

La figure 4 représente un procédé de fonctionnement du microcontrôleur de la figure 1 selon un mode de réalisation.

Plus particulièrement, l'exemple représenté illustre un procédé de mise à jour d'une des données de sécurité, par exemple la donnée Key 20 comme dans la figure précédente.

Dans cet exemple, au début du procédé, le secteur 200 est le secteur courant et le secteur 220 est le secteur de substitution.

Dans une première étape 412 (Erase alternate sector: 220), le secteur 220 qui est le secteur de substitution (OBK_Sel_0), a son contenu dédié aux données de sécurité effacé, par exemple par l'interface mémoire 106, suite à une commande logicielle (alternate_OBK_erase).

Dans une étape suivante 414 (Write new version of Data in 220) la nouvelle version de la donnée de sécurité Key 20 update est copiée dans le secteur 220, par exemple avec l'interface mémoire 106, suite à une autre commande logicielle (ALT_SEC). Dans un exemple, cette écriture se fait directement via un tableau d'association de bit d'adresse (bitmap en anglais) lié aux secteurs 200 et/ou 220.

A la suite de l'étape 414, les étapes 302, 304, 306, 307, 308, 310 et 314 sont mises en oeuvre de façon similaire à celles de la figure 3 sauf que l'étape 312 n'est plus présente et que, dans l'étape 310, lorsque la branche Y est prise, alors l'étape 314 est directement mise en oeuvre sans que l'étape 312 soit exécutée.

Cela permet que si une perte d'alimentation, ou une réinitialisation, ont lieu pendant l'étape d'effacement 414, cela n'impacte pas sur le fonctionnement de la machine d'état qui met en oeuvre les étapes 302, 304, 306, 307, 308, 310 et 314. Ainsi, si une perte d'alimentation, ou une réinitialisation, ont lieu pendant la mise en oeuvre des étapes 302, 304, 306, 307, 308, 310 et 314 de la figure 4, alors le secteur courant est toujours valide puisqu'il n'y a plus d'effacement du secteur courant dans les étapes mises en oeuvre par la machine d'état 300. Cela ajoute de la robustesse vis-à-vis des coupures d'alimentation ou des réinitialisations forcées.

De plus, les étapes mises en oeuvre par la machine d'état 300 étant moins nombreuses cela augmente la rapidité de traitement.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, l'étape 412 peut également être mise en oeuvre par une machine d'état qui est différente de la machine d'état 300.

Enfin, la mise en oeuvre pratique des modes de réalisation et variantes décrits est à la portée de la personne du métier à partir des indications fonctionnelles données ci-dessus.

## Revendications

1. Procédé de mise à jour d'une donnée de sécurité (Key 20) stockée dans un premier secteur (200) d'une mémoire (104) non volatile d'un microcontrôleur (100), un premier statut (OBK_Sel_1, OBK_Sel_2) étant affecté au premier secteur (200), le procédé comprenant les étapes successives suivantes :
- effacer (alternate_OBK_erase) le contenu d'un deuxième secteur (220) de la mémoire non volatile, différent du premier secteur (200),
- écrire une nouvelle version de la donnée de sécurité (Key 20 update) dans le deuxième secteur (220) ; et
- affecter le premier statut (OBK_Sel_1, OBK_Sel_2) au deuxième secteur (220).

2. Microcontrôleur (100) comprenant une mémoire ayant un premier secteur mémoire (200) et un deuxième secteur mémoire (220) différent du premier secteur, une donnée de sécurité (Key 20) à mettre à jour étant stockée dans le premier secteur (200), un premier statut (OBK_Sel_1, OBK_Sel_2) étant affecté au premier secteur (200), le microcontrôleur (100) étant configuré pour successivement :
- effacer (alternate_OBK_erase) le contenu du deuxième secteur mémoire (220),
- écrire une nouvelle version de la donnée de sécurité (Key 20 update) dans le deuxième secteur ; et
- affecter le premier statut (OBK_Sel_1, OBK_Sel_2) au deuxième secteur (220).

3. Procédé selon la revendication 1, ou microcontrôleur selon la revendication 2, dans lequel chaque secteur (200, 220) comprend plusieurs données de sécurité.

4. Procédé ou microcontrôleur selon la revendication 3, dans lequel, après avoir écrit la nouvelle version de la donnée de sécurité dans le deuxième secteur et, avant d'affecter le premier statut au deuxième secteur, les données de sécurité stockées dans le premier secteur (200) sont recopiées séquentiellement dans le deuxième secteur (220).

5. Procédé ou microcontrôleur selon la revendication 4, dans lequel la recopie desdites données de sécurité du premier secteur (200) dans le deuxième secteur (220) est mise en oeuvre par une machine d'état (300).

6. Procédé ou microcontrôleur selon la revendication 4 ou 5, dans lequel le premier secteur (200) et le deuxième secteur (220) comprennent des espaces mémoires référencés chacun par un indice d'adresse (Addr_index),
lesdites données de sécurité du premier secteur (200) étant chacune stockée dans un desdits espace mémoire du premier secteur (200), et chacune recopiée dans le deuxième secteur (220) si l'espace mémoire du deuxième secteur (220), ayant un indice d'adresse correspondant à l'indice d'adresse de l'espace mémoire associé à la donnée de sécurité du premier secteur à recopier, est vierge.

7. Procédé selon l'une quelconque des revendications 1 ou 3 à 6, ou microcontrôleur selon l'une quelconque des revendications 2 à 6, dans lequel l'effacement du contenu du deuxième secteur est mis en oeuvre par un circuit de commande de la mémoire (106) suite à la première commande logicielle (alternate_OBK_erase).

8. Procédé ou microcontrôleur selon la revendication 7, dans lequel l'écriture de la nouvelle version de la donnée de sécurité dans le deuxième secteur est mise en oeuvre par ledit circuit de commande (106) suite à une deuxième commande logicielle.

9. Procédé selon l'une quelconque des revendications 1 ou 3 à 8, ou microcontrôleur selon l'une quelconque des revendications 2 à 8, dans lequel un deuxième statut est affecté au premier secteur une fois le premier statut affecté au deuxième secteur.

10. Procédé ou microcontrôleur selon la revendication 9, dans lequel, préalablement à la mise jour, le premier statut (OBK_Sel_1, OBK_Sel_2) est affecté au premier secteur et le deuxième statut (OBK_Sel_0) est affecté au deuxième secteur (220).

11. Procédé ou microcontrôleur selon la revendication 9 ou 10, dans lequel chaque secteur mémoire comporte un espace dédié au stockage du statut affecté au secteur.

12. Procédé selon l'une quelconque des revendications 1 ou 3 à 11, ou microcontrôleur selon l'une quelconque des revendications 2 à 11, dans lequel seul le secteur mémoire affecté du premier statut (OBK_Sel_1, OBK_Sel_2) est lu.

13. Procédé selon l'une quelconque des revendications 1 ou 3 à 12, ou microcontrôleur selon l'une quelconque des revendications 2 à 12, dans lequel la ou les données de sécurité sont des clés de chiffrement.

14. Procédé selon l'une quelconque des revendications 1 ou 3 à 13, ou microcontrôleur selon l'une quelconque des revendications 2 à 13, dans lequel les étapes :
- effacer (alternate_OBK_erase) le contenu du deuxième secteur mémoire (220),
- écrire une nouvelle version de la donnée de sécurité (Key 20 update) dans le deuxième secteur ; et
- affecter le premier statut (OBK_Sel_1, OBK_Sel_2) au deuxième secteur (220) ;
sont réalisées pour chaque cycle de mise à jour.

15. Système comprenant un microcontrôleur selon l'une quelconque des revendications 2 à 14 et une unité de mise à jour (190) externe au microcontrôleur (100) ;
l'unité de mise à jour étant configurée pour transmettre, au microcontrôleur (100) et lors d'une mise à jour, ladite nouvelle version de la donnée de sécurité.
